# EUROPEAN PATENT SPECIFICATION

(11) **EP 2 905 490 B1**
(45) Date of publication and mention of the grant of the patent: **27.02.2019**
(21) Application number: 14020040.3
(22) Date of filing: 21.03.2014
(51) Int. Cl.: F16D 1/04, F16D 1/08

(54) **Shaft connection structure**
Wellenverbindungsstruktur
Structure de raccord de tige

(30) Priority: 29.03.2013 JP 2013075336
(43) Date of publication of application: 12.08.2015
(73) Proprietor: SUMITOMO HEAVY INDUSTRIES, LTD., Tokyo 141-6025 (JP)
(72) Inventor: Nishibe, Shinichi, Obu-shi, Aichi, 474-8501 (JP); Mitsufuji, Sakae, Obu-shi, Aichi, 474-8501 (JP); Nishitani, Yuichi, Obu-shi, Aichi, 474-8501 (JP); Ishikawa, Tetsuzo, Obu-shi, Aichi, 474-8501 (JP)
(74) Representative: Schmidbauer, Andreas Konrad

(56) References cited:
- DE-A1- 4 104 217
- DE-A1- 10 018 057
- JP-A- 2002 221 188
- US-A1- 2010 119 301

## Description

### BACKGROUND OF THE INVENTION

### Field of the Invention

The present invention relates to a shaft connection structure.

### Description of Related Art

JP 2009-257543 A discloses a shaft connection structure that uses a clamp fastener.

The connection structure includes a first shaft that has a hollow portion, a second shaft that is inserted into the hollow portion of the first shaft, and a clamp fastener that is arranged outside the hollow portion of the first shaft and fastens the first shaft and the second shaft with each other by using a frictional force.

In the shaft connection structure, the clamp fastener is in a very slippery situation on the first shaft until connection is completed.

Accordingly, during the fastening between the first shaft and the second shaft, there is a problem in that the clamp fastener may slip out of (fall from) a shaft end of the first shaft.

DE 41 04 217 A1 was used as a basis for the preamble of claim 1 and discloses a coupling that transmits the drive from the drive member to the driven shaft. It is formed by a bush which is rigidly connected to the drive member, with four equally spaced longitudinal slots. The bush has an outer surface with a cross-section defined by a spiral curve, and fits inside a second bush which has a matching bore. When the inner bush is rotated with respect to the outer bush, the inner bush is radially compressed and grips the shaft. Thus the drive is transmitted by friction from the drive member to the shaft.

US 2010/119301 A1 discloses a device for the rotationally fixed connection of a drive-effective pin of a gearbox to an articulated body of a drive coupling of a drive shaft. The the pin and the articulated body of the drive coupling have respective mutually corresponding external axial toothings and internal axial toothings which are able to mesh with one another, and for an axial securing of the articulated body and the pin to be made possible by an axially displaceable bushing arranged on the pin, which bushing can be attached to a connecting portion of the articulated body.

### SUMMARY OF THE INVENTION

The present invention has been made in order to solve the above-mentioned problems, and an object thereof is to provide a shaft connection structure that can prevent falling of a clamp fastener from a first shaft.

According to the present invention, there is provided a shaft connection structure as set forth in claim 1.

In the invention, the O-ring is used so as to prevent the falling of the clamp fastener from the first shaft during a shaft connection operation.

In other words, the O-ring is originally arranged between two members and functions in such a manner that oil and the like does not leak from one side of the O-ring to the other side. However, in the present invention, this is diverted as a component used to prevent the falling of the clamp fastener.

The O-ring has adequate elasticity and can be easily mounted on the first shaft, and does not damage the first shaft during the mounting and removal as is the case with a retaining ring. Also, the O-ring has a sufficient retaining force to be capable of preventing the falling of the clamp fastener when mounted on the first shaft. Moreover, the O-ring is low-cost and easy to come by.

An operator can perform the shaft connection operation more easily and within a shorter period of time since there is no concern over the falling of the clamp fastener.

According to the invention, the falling of the clamp fastener from the first shaft can be prevented.

### BRIEF DESCRIPTION OF THE DRAWINGS

Fig. 1 is a cross-sectional view showing a shaft connection structure according to an example of an embodiment not according to the present invention.
Fig. 2 is an overall schematic cross-sectional view of a reduction gear that has a first shaft of the connection structure of Fig. 1.
Fig. 3 is an end view of the reduction gear viewed from a motor side.
Fig. 4 is a cross-sectional view showing an example of an embodiment of the present invention.

### DETAILED DESCRIPTION OF THE INVENTION

Hereinafter, an example of an embodiment not according to the present invention will be described in detail with reference to the accompanying drawings.

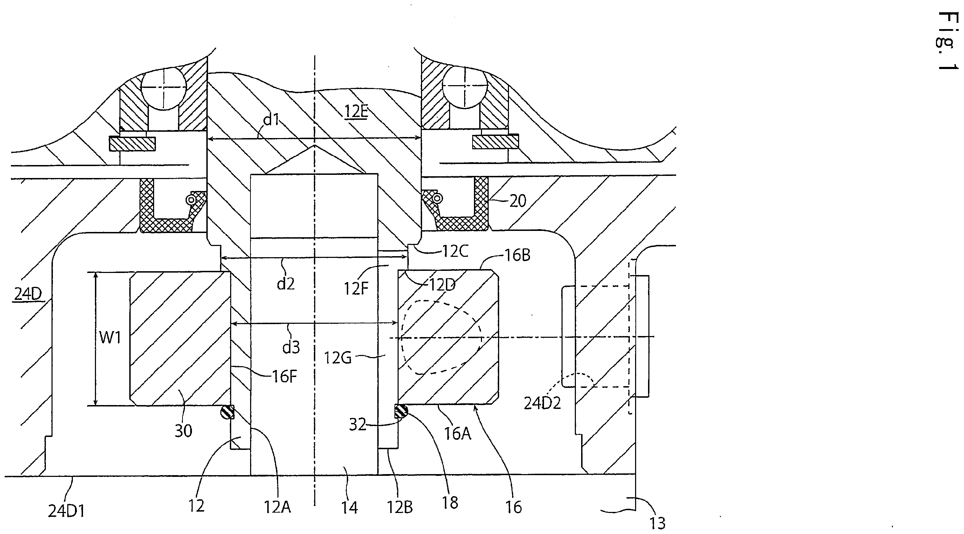

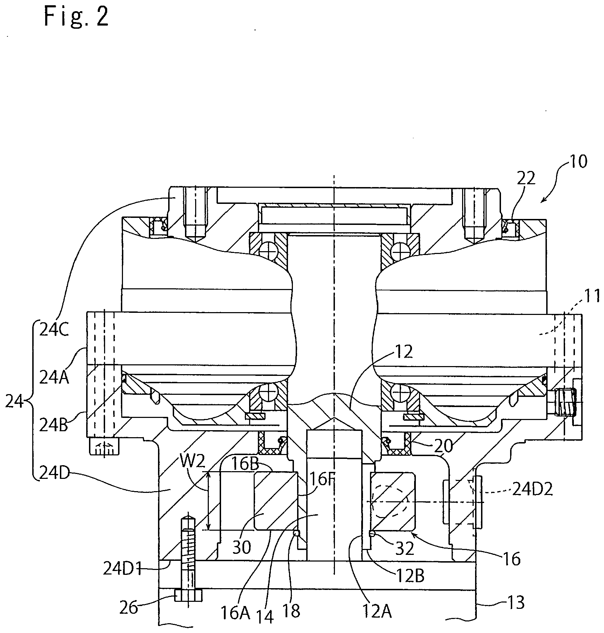

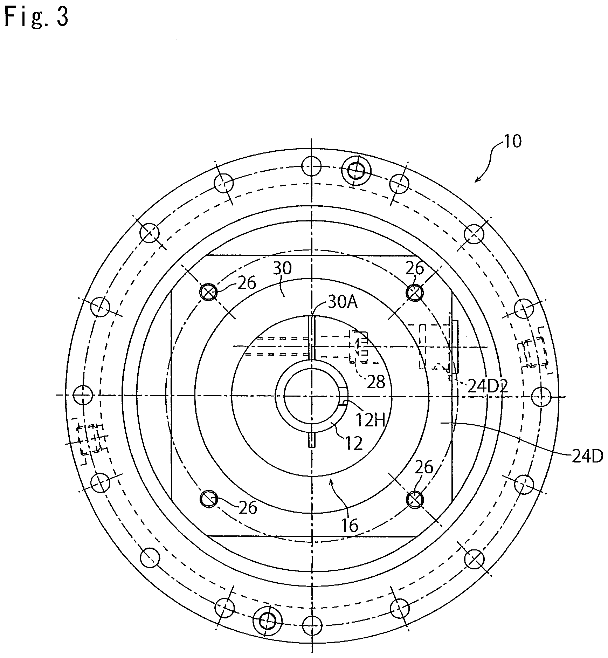

Fig. 1 is a cross-sectional view showing a shaft connection structure according to an example of the embodiment of the present invention, Fig. 2 is an overall schematic cross-sectional view of a reduction gear that has a first shaft of the connection structure of Fig. 1, and Fig. 3 is an end view of the reduction gear viewed from a motor side of Fig. 1.

The shaft connection structure includes an input shaft (first shaft) 12 of a reduction gear 10 which has a hollow portion 12A, a motor shaft 14 (second shaft) that is inserted into the hollow portion 12A of the input shaft 12, and a clamp fastener 16 that is arranged outside the hollow portion 12A of the input shaft 12 and fastens the input shaft 12 and the motor shaft 14 with each other by using a frictional force.

An O-ring 18 that prevents falling of the clamp fastener 16 is arranged on a shaft end 12B side from the clamp fastener 16 in the input shaft 12.

To be more specific, a lubricant is sealed in the reduction gear 10, and is sealed by oil seals 20 and 22. The input shaft 12 projects from a casing 24 of the reduction gear 10 in a state of being sealed by the oil seals 20 and 22.

In this embodiment, the reduction gear 10 is installed in a state where the input shaft 12 extends in a vertical direction. In other words, the input shaft 12 is installed in a state where the shaft end 12B side of the input shaft 12 is lower (height from the ground is lower) than the opposite shaft end side.

The casing 24 of the reduction gear 10 is configured to have a main body casing 24A that covers a reduction mechanism 11 of the reduction gear 10, and a bottom cover 24B and a top cover 24C that cover an axial end face of the reduction gear 10. A cylindrical coupling cover 24D is integrally formed in the bottom cover 24B, and a motor 13 is connected to a lowermost end face 24D1 of the coupling cover 24D via a connecting bolt 26. The coupling cover 24D covers an almost entire radially outer side of the clamp fastener 16. A tool hole 24D2 is formed in the coupling cover 24D so as to tighten a clamp bolt 28 of the clamp fastener 16 which will be described later.

In this embodiment, the clamp fastener 16 is mainly configured to have a clamp ring 30 that has a slit 30A, and the clamp bolt 28 that reduces an inner diameter of the clamp ring 30 by narrowing a gap between the clamp ring 30 and the slit 30A.

A first step 12C and a second step 12D are disposed in the input shaft 12, a main body section 12E, an intermediate part 12F, and a clamp section 12G are provided with the first step 12C and the second step 12D being a boundary. An outer diameter of the main body section 12E is d1, an outer diameter of the intermediate part 12F is d2, and an outer diameter of the clamp section 12G is d3. The outer diameter decreases toward the shaft end 12B side (dl>d2>d3).

The second step 12D restricts a movement of the clamp fastener 16 toward an axially opposite shaft end side, and thereby regulates an end face 16B of the clamp fastener 16 on the opposite shaft end side (defines a clamp position of the clamp fastener 16 on the input shaft 12).

An arrangement groove 32 of the O-ring 18 is formed in the input shaft 12 at a distance corresponding to an axial width W1 of the clamp fastener 16 from the second step 12D. The O-ring 18 is fitted into the arrangement groove 32 so that an axial position of the O-ring 18 on the input shaft 12 is determined, and the O-ring 18 regulates an axial position of an end face 16A of the clamp fastener 16 on the shaft end side.

An input shaft slit 12H (refer to Fig. 3) that is formed in the input shaft 12 is to ensure a reduction in diameter when the input shaft 12 is tightened from an outer circumference by the clamp fastener 16. The input shaft slit 12H is formed to be wider than usual. This is to arrange a key (not shown) thereinbetween and allow the input shaft 12 to be connected with the motor shaft (second shaft) 14 by the key in addition to be connected by the clamp fastener 16 (refer to a combination example in next embodiment) . In the embodiment of Figs. 1 to 3, the key connection with the motor shaft (second shaft) 14 is not used in combination.

Next, an effect of the shaft connection structure according to this embodiment will be described.

The input shaft 12 and the clamp fastener 16 are in a very slippery situation on the input shaft 12 until the connection is completed. In particular, in this embodiment, the input shaft 12 of the reduction gear 10 extends in a vertical direction. In this state, the clamp fastener 16 easily falls downward unless an operator performs an operation in a state where the weight of the clamp fastener 16 itself is reliably supported by using his or her hand.

Moreover, in the reduction gear 10 according to this embodiment, the entire clamp fastener 16 is arranged in the coupling cover 24D (that covers the radially outer side of the clamp fastener 16), and thus the operator cannot easily support the clamp fastener 16 from the outer side. Accordingly, the operator has to perform the operation under extreme conditions, and thus the falling of the clamp fastener 16 does occur often during the operation. The falling of the clamp fastener 16 may not only cause a significant reduction in efficiency of the shaft connection operation but also, in particular, bring about an injury to the operator or damage to components in the vicinity.

Also, in many cases, this type of shaft connection is an operation in an atmosphere where the lubricant is handled during, for example, maintenance entailing exchange of the oil seals 20 and 22 and exchange of the lubricant and the operator has to perform the fastening operation with gloves or the like soaked with the lubricant. In this case, when the operation is performed with the clamp fastener 16 being supported by a hand, the lubricant adheres to the outer circumference of the input shaft 12 and a clamp fastening surface 16F while the clamp fastener 16 is moved up and down on the input shaft 12, and the clamp fastening may be subjected to an adverse effect. Also, in a case where a cloth or the like is used so as to avoid the adverse effect and the operation is performed while the outer circumference of the input shaft 12 and the clamp fastening surface 16F are appropriately wiped, work efficiency is further reduced as a matter of course.

According to this embodiment, the O-ring 18 is inserted into the input shaft 12, and thus the falling of the clamp fastener 16 can be easily prevented. Accordingly, the above-described inconvenience can be prevented in advance.

In other words, the O-ring 18 has adequate elasticity and can be easily mounted on the input shaft 12, and does not damage the input shaft 12 during the mounting and removal as is the case with a retaining ring. A delicate mirror surface is required for the outer circumference of the input shaft 12 during the clamp fastening, and thus the advantage of not damaging the outer circumference of the input shaft 12 is large. Also, the O-ring 18, by nature, has a sufficient retaining force to be capable of preventing the falling of the clamp fastener 16 even in a case, for example, of being mounted on the input shaft 12 extending in a vertical direction. Accordingly, the operator can perform the shaft connection operation more easily and within a shorter period of time since there is no concern over the falling of the clamp fastener 16.

Moreover, the O-ring 18 itself is low-cost and easy to come by, and entails almost no increase in cost.

In this embodiment, particularly the input shaft 12 is a shaft that projects from the reduction gear 10 in which the lubricant is sealed, and is applied to a situation in which the lubricant is likely to adhere to the outer circumference of the input shaft 12 and the clamp fastening surface 16F, examples of which include leakage of the lubricant and the exchange of the oil seals 20 and 22 and the lubricant. However, the O-ring 18 originally has the function "not leaking the lubricant from one side to the other side of the O-ring 18" as one of inherent functions thereof. Accordingly, even in a case where the leakage of the lubricant does not occur or even in a case where the fastening operation is performed in the atmosphere where the lubricant is handled, penetration of the clamp fastening surface 16F by the lubricant can be minimized.

Also, the first step 12C and the second step 12D are disposed in the input shaft 12, and the outer diameter gradually decreases from the main body section 12E, the intermediate part 12F, and the clamp section 12G toward the shaft end 12B, and thus an elastic deformation can be easily achieved during the clamping while strength originally required for the input shaft 12 is maintained. In this embodiment, the second step 12D regulates the end face 16B of the clamp fastener 16 on the opposite shaft end side, and thus the most proper position for the clamp can be easily determined on the input shaft 12.

Also, since the arrangement groove 32 of the O-ring 18 is formed in advance in the input shaft 12, the clamp position of the clamp fastener 16 on the input shaft 12 can be determined in a stage where the O-ring 18 is mounted along with the regulation in the second step 12D. Accordingly, the operator can perform the fastening operation in a state where the clamp fastener 16 is not moved upward or downward at all on the input shaft 12, and thus workability is further improved.

Moreover, the clamp fastener 16 is pinched by the second step 12D and the O-ring 18 even after the fastening and, in particular, the end face 16B on the opposite shaft end side abuts against the second step 12D. Accordingly, even in a case where the lubricant leaks from a reduction gear 10 side, the lubricant is unlikely to penetrate the clamp fastening surface 16F.

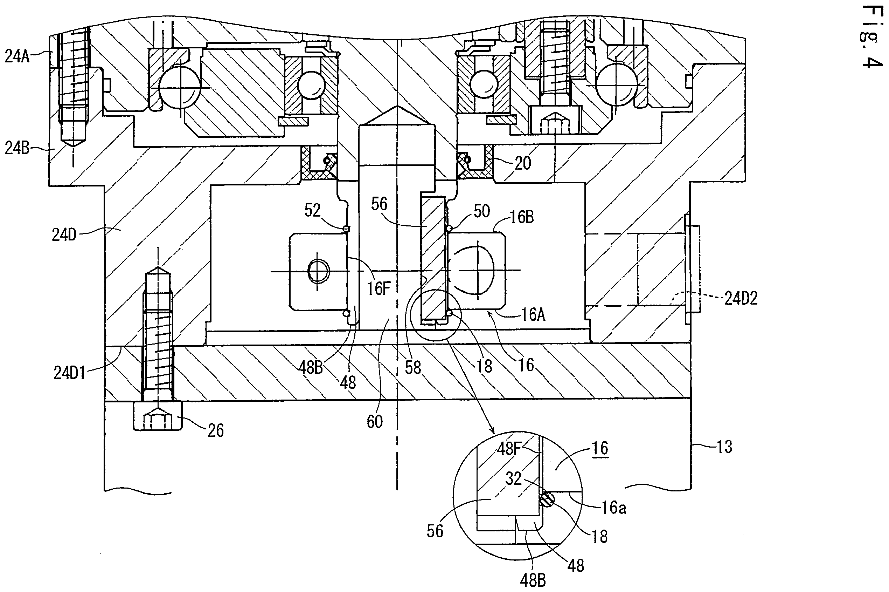

Fig. 4 shows an example of an embodiment of the present invention.

In the embodiment of Fig. 4, the O-ring 18 that prevents the falling of the clamp fastener 16 is also arranged on a shaft end 48B side from the clamp fastener 16 in the input shaft (first shaft) 48 to prevent the falling of the clamp fastener 16, and thus an effect similar to the previous embodiment can be achieved.

In addition, in this embodiment, the end face 16B of the clamp fastener 16 on the opposite shaft end side is regulated by another O-ring 50 instead of regulating the end face 16B of the clamp fastener 16 on the opposite shaft end side by using a "step" such as the second step 12D of the previous embodiment. Also, the arrangement grooves 32 and 52 are respectively formed at positions where the two O-rings 18 and 50 are to be arranged. Accordingly, an optical clamp position on the input shaft 12 can be determined, as is the case with the previous embodiment, by using the two O-rings 18 and 50.

Also, the O-rings 18 and 50 are arranged on both axial sides of the clamp fastener 16, and thus the penetration of the clamp fastening surface 16F by the lubricant can be further reliably prevented. In particular, the end face 16B of the clamp fastener 16 on the opposite shaft end side is regulated by the O-ring 50, and thus the penetration of the clamp fastening surface 16F by the lubricant can be effectively prevented by the O-ring 50 of the end face 16B on the opposite shaft end side even when leakage occurs in the oil seal 20 of the reduction gear 10 (device where the lubricant is sealed).

Also, in this embodiment, connection by a key 56 is used in combination with a frictional connection by the clamp fastener 16 during the shaft connection. As can be seen from Fig. 4, the key 56 does not project from an outer circumference of the input shaft 48, and thus a motor shaft (second shaft) 60 attached with the key 56 can be easily inserted into a key groove 58 (as in a case where the motor shaft (second shaft) 14 without a key groove is inserted). By using the connection by the key 56 in combination, an advantage of the frictional connection can be enjoyed while the connection between the input shaft 48 and the motor shaft 60 can be maintained by the key 56 even in a case where the frictional force by the clamp fastener 16 is reduced for some reason.

Also, in a case where the connection by the key 56 is used in combination as in this embodiment, the O-ring 18 (moreover, the O-ring 50) crosses a radially outer side of the key 56, and thus falling of the key 56 can also be prevented at the same time by the O-rings 18 and 50 and the workability of the fastening can be further improved. As is the case with the previous embodiment, the motor shaft 14 without the key groove can be inserted and the connection by the clamp fastener 16 alone can be performed in the configuration of Fig. 4.

The other configuration is similar to the previous embodiment, and thus the same reference numerals as in the previous embodiment are attached to the same or functionally similar parts in the drawing and redundant description will be omitted.

In the above-described embodiment, the present invention is applied to a situation in which the effect of the present invention is most significantly achieved, that is, a situation in which the first shaft extends vertically and a shaft end side of the first shaft is positioned beneath the opposite shaft end side. However, the present invention is not an invention that is effective only in the situation but functions effectively if the shaft end side of the first shaft is installed in a state of being lower than the opposite shaft end side (since the clamp fastener is likely to fall). Moreover, the present invention can be applied even in a case where the first shaft is horizontal or even in a case where the shaft end is installed in a state of being higher than the opposite shaft end side. For example, the O-ring can be mounted in advance before the installation of the reduction gear, and thus the present invention can achieve the advantage of facilitated handling of the reduction gear and the clamp fastener.

Also, the input shaft of the reduction gear as the first shaft and the motor shaft as the second shaft are shown as the example of the previous embodiment, but the present invention is not limited thereto and the first shaft and the second shaft may be shafts of any device.

For example, the present invention can achieve a significant effect from a viewpoint of preventing the penetration by the lubricant in a case where the first shaft and the second shaft are shafts projecting from the device in which the lubricant is sealed. However, the present invention can be applied even to a situation in which the lubricant is not handled, and can achieve the inherent effect of preventing the falling of the clamp fastener.

Also, the present invention can achieve a particularly significant effect in an aspect in which a cover member covering the radially outer side of the clamp fastener is present as in the previous embodiment, that is, in an aspect in which it is difficult to fasten the clamp fastener while pressing the clamp fastener. However, the present invention can also be applied to a situation in which the cover member is not present, and can achieve the inherent effect of preventing the falling of the clamp fastener.

Also, in the previous embodiment, the arrangement groove of the O-ring is formed at the position where any O-ring is to be arranged, but the support or holding of the clamp fastener can be performed even without forming the arrangement groove. Accordingly, the formation of the arrangement groove of the O-ring is not an essential configuration.

Likewise, the present invention can be applied even when the clamp position is not determined, and thus the formation of the step on the first shaft and the arrangement of the O-ring of the opposite shaft end side of the clamp fastener are not essential configurations.

## Claims

1. A shaft connection structure comprising:
a first shaft (12, 48) that includes a hollow portion (12A) ;
a second shaft (14, 60) that is inserted into the hollow portion (12A) of the first shaft (12); and
a clamp fastener (16) that is arranged outside the hollow portion (12A) of the first shaft (12) and fastens the first shaft (12) and the second shaft (14) with each other by using a frictional force,
**characterized in that** an O-ring (18, 50) that prevents falling of the clamp fastener (16) is arranged on a shaft end side (12B, 48B) from the clamp fastener (16) in the first shaft (12, 48),
wherein the first shaft (12, 48) and the second shaft (14, 60) are connected also by a key (56) and the O-ring (18, 50) is arranged on a radially outer side of the key.

2. The shaft connection structure according to claim 1, wherein a step portion (12C, 12D) is disposed in the first shaft (12) and the step portion (12D) regulates an end face (16B) of the clamp fastener (16) on the opposite shaft end side.

3. The shaft connection structure according to claim 1 or 2,
wherein an arrangement groove (32) of the O-ring (18) is formed in the first shaft (12).

4. The shaft connection structure according to any one of claims 1 to 3, further comprising a cover member (24, 24D) that covers a radially outer side of the clamp fastener (16).

## Patentansprüche

1. Wellenverbindungsaufbau, der Folgendes aufweist:
eine erste Welle (12, 48), die einen hohlen Teil (12A) aufweist;
eine zweite Welle (14, 60), die in den hohlen Teil (12A) der ersten Welle (12) eingeführt wird; und
eine Klemmbefestigungsvorrichtung (16), die außerhalb des hohlen Teils (12A) der ersten Welle (12) angeordnet ist und die erste Welle (12) und die zweite Welle (14) durch Einsatz einer Reibungskraft aneinander befestigt,
**dadurch gekennzeichnet, dass** ein O-Ring (18, 50), der ein Runterfallen der Klemmbefestigungsvorrichtung (16) verhindert, auf einer Wellenendseite (12B, 48B) von der Klemmbefestigungsvorrichtung (16) in der ersten Welle (12, 48) angeordnet ist,
wobei die erste Welle (12, 48) und die zweite Welle (14, 60) ebenfalls durch eine Passfeder (56) verbunden sind und der O-Ring (18, 50) auf einer radial äußeren Seite der Passfeder angeordnet ist.

2. Wellenverbindungsaufbau gemäß Anspruch 1, wobei ein Stufenteil (12C, 12D) in der ersten Welle (12) angeordnet ist, und der Stufenteil (12D) eine Endfläche (16B) der Klemmbefestigungsvorrichtung (16) auf der gegenüberliegenden Wellenendseite einstellt bzw. festlegt.

3. Wellenverbindungsaufbau gemäß Anspruch 1 oder 2, wobei eine Anordnungsnut (32) des O-Rings (18) in der ersten Welle (12) gebildet ist.

4. Wellenverbindungsaufbau gemäß einem der Ansprüche 1 bis 3, der ferner ein Abdeckungsglied (24, 24D) aufweist, das eine radial äußere Seite der Klemmbefestigungsvorrichtung (16) abdeckt.

## Revendications

1. Structure de connexion d'arbre comprenant :
un premier arbre (12, 48) qui comprend une partie creuse (12A) ;
un deuxième arbre (14, 60) qui est inséré dans la partie creuse (12A) du premier arbre (12) ; et
une attache par serrage (16) qui est agencée à l'extérieur de la partie creuse (12A) du premier arbre (12) et qui attache l'un à l'autre le premier arbre (12) et le deuxième arbre (14) en utilisant une force de frottement,
**caractérisé en ce qu'**un joint torique (18, 50) empêchant la chute de l'attache par serrage (16) est disposé sur un côté d'extrémité d'arbre (12B, 48B) à partir de l'attache par serrage (16) dans le premier arbre (12, 48),
dans lequel le premier arbre (12, 48) et le deuxième arbre (14, 60) sont également connectés par une clavette (56) et le joint torique (18, 50) est disposé sur un coté radialement externe de la clavette.

2. Structure de connexion d'arbre selon la revendication 1, dans laquelle une partie en escaliers (12C, 12D) est disposée dans le premier arbre (12) et la partie en escaliers (12D) régule une face d'extrémité (16B) de l'attache par serrage (16) sur le côté d'extrémité d'arbre opposé.

3. Structure de connexion d'arbre selon la revendication 1 ou 2, dans laquelle une rainure d'agencement (32) du joint torique (18) est formée dans le premier arbre (12).

4. Structure de connexion d'arbre selon l'une quelconque des revendications 1 à 3, comprenant en outre un élément de recouvrement (24, 24D) qui recouvre un côté radialement externe de l'attache par serrage (16).
